(19) Europäisches Patentamt
European Patent Office
Office européen des brevets

(11) EP 2 088 706 A2

(12) EUROPEAN PATENT APPLICATION

(43) Date of publication:
12.08.2009 Bulletin 2009/33

(51) Int Cl.:
$H04L\ 1/00$ (2006.01)

(21) Application number: 09162282.9

(22) Date of filing: 09.06.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(71) Applicant: KAMSTRUP A/S
8660 Skanderborg (DK)

(72) Inventor: Drachmann, Jens
8260 Viby J (DK)

(74) Representative: Poulsen, Niels Jakob
Plougmann & Vingtoft a/s
Sundkrogsgade 9
P.O. Box 831
2100 Copenhagen Ø (DK)

(54) **Power saving data format for a communication module**

(57) A data format for communicating data, e.g. for automatic reading of consumption meters, the data format comprising a data packet comprising 1) a header for an identification of a device transmitting the data packet, 2) a data field for data, 3) a signature representing a coded information regarding a format of the data field, and 4) a check sum, such as a Cyclic Redundancy Check sum, allowing a receiver to verify interpretation of the data in the data field. A preferred consumption meter for measuring a consumed quantity value transmits this quantity value according to the data format. Especially, the consumption meter may repeatedly transmit in RF format such data packet in which the data field comprises a time of measuring and the quantity value. Such consumption meter is suited for automatic drive-by reading and it is suited for battery operation, since the data format helps to save power as data format information can be omitted. A reading system is informed about the data format by means of the signature and an identification of the consumption meter, and based on pre-stored information linked to the signature, the system can interpret the read quantity data.

Fig. 4

CRC1 calculated on the whole MBUS string
CRC2 calculated on the whole frame
PS calculated on CI, header and data record headers

**Description**

FIELD OF THE INVENTION

The invention relates to a data format suited for transmitting data from a communication module in a power efficient manner. Especially, the invention can be applied in a communication module for a consumption meter so as to allow power efficient automatic reading of a consumed quantity. The invention is particularly suited for battery operated meters communicating data using the MBUS protocol (EN 13757-3), but the invention can also be utilized on other protocols, such as COSEM or DLMS.

BACKGROUND OF THE INVENTION

Consumption meters with communication modules for automatic reading purposes, e.g. wireless Radio Frequency (RF) modules, are often battery powered. A wireless RF communication module is often the only electronic part in such a meter, or for fully electronic meters it is often the most power demanding component, and thus the operation of such communication module significantly influences battery life time of the meter. This is especially the case if it is required that the meter continuously transmits read values, such as with intervals of a few seconds, which is required to allow predictable and efficient drive-by reading of the meter.

Typically, one communication session between a consumption meter and a reading system includes transmitting a packet of one or more frames from the consumption meter, and optionally the reading system transmits a response to which the consumption meter finally transmits a reply frame.

Using the standardized MBUS data format (specified in EN 13757-3) for transmitting read data from a consumption meter, the relatively simple data in the form of a quantity value and a time or reading often represent a small fraction of the bits required in a full MBUS string. Especially, the length of such as header and format information in such MBUS string is significant compared to the number of data bits itself. Thus, when transmitting such full MBUS string, a significant amount of electrical power consumed by the communication module is due to transmitting bits which do not directly represent the essential data values. For one specific consumption meter the data format will most often be the same, and thus power is lost for transmitting redundant information.

SUMMARY OF THE INVENTION

In view of the above, it may be seen as an object of the present invention to provide an improved data format allowing power efficient transmission of data from a device, such as a consumption meter with a battery driven communication module.

In a first aspect, the invention provides a data format for communicating data, the data format comprising a data packet comprising

-    a header for an identification of a device transmitting the data packet,
-    a data field for data,
-    a signature representing a coded information regarding a format of the data field, and
-    a check sum, such as a Cyclic Redundancy Check sum, allowing a receiver to verify interpretation of the data in the data field.

By including such signature representing coded information regarding a format of the data field, it is possible for a receiver to combine with the identification of the device in order to get information of the format of the data field. This can be done with a signature having a length of a few bits, e.g. by the receiver having a pre-stored table of device identifications and signatures indicating the various data field formats available for a number of devices. Compared to transmitting e.g. a full MBUS string (according to EN 13757-3) with the data field format in each data packet, a substantial amount of electric power can be saved in the device when transmitting many data packet having the same data field format.
In a second aspect, the invention provides a device comprising a communication module, such as a wireless Radio Frequency transmitter, arranged to transmit a data format according to the first aspect.
As already mentioned for the first aspect, such device is capable of saving electric power for its communication module, since redundant data field format information is eliminated. This is a significant improvement especially for battery driven devices which are required to transmit many data packets, leading to a prolonged battery life time.
The device may either comprise a plurality of different pre-stored signatures linked to different data field formats, such as different decimal places for the data representing the quantity value, or such as different types of data represented in the data field, or the device may be arranged to compute a signature according to a format of the data in the data field. Thus, in a simple embodiment, the device may include only a few, e.g. two or three, different pre-stored signatures which can then be selected corresponding to the same number of possible data field formats. Alternatively, in more complex devices, a large number of possible data field formats may exist, including mixtures of number formats and types of data. Thus, in such devices, it may be preferred that the device computes the signature according to the actual data field format.

Preferably, the signature has a very limited length in order to save the most power. A signature length of less than 30 bits, e.g. a length of 16 bits, is found suitable for automatic reading of consumption meters.

Especially, the signature may represent a check sum, such as a Cyclic Redundancy Check sum of the information regarding the format of the data field. Hereby, it is possible for a receiver to verify that the assumed data field format based on the signature is correct.

The device may have a plurality of communication modes comprising: a pure transmission mode, and a bi-directional mode. In a pure transmission modem the communication module may repeatedly transmit data packets, such as transmitting a data packet with an intermediate interval of 1-60 seconds, such as an intermediate interval of 5-20 seconds.

As already mentioned, the device, or at least the communication module of the device may be driven by a battery. With the power saving data packet format, it is possible to have a long life of the battery even in case of frequent data packet transmissions, such as a communication module continuously transmitting data packets with intervals of a few seconds. The communication module may comprise an RF transmitter arranged to transmit the data packet in an RF representation, such as at a carrier frequency within 860-880 MHz, such as using a Gaussian Frequency-Shift Keying modulation. The communication module may be arranged for transmitting the data packet in a communication medium being one of: air, a dedicated wired medium, and a public electric supply network.

In one sub aspect of the second aspect, the device is a consumption meter, such as a charging consumption meter, arranged to measure a quantity of a physical entity and to generate a quantity value accordingly, and wherein the data in the data field comprises data representing a time where the consumption meter has measured the consumed quantity and data representing the quantity value. The invention is especially suited for battery driven consumption meters having a mode of transmission where data packets with data representing quantity data and corresponding reading time are transmitted continuously with intervals of a few seconds. Especially, the consumption meter may be an electricity meter, a heating meter, a cooling meter, a water meter, or a gas meter.

In a third aspect, the invention provides a consumption meter reading system comprising

- a consumption meter according to the mentioned sub aspect of the second aspect, and

- a receiver system, such as comprising a mobile device such as a laptop computer with an antenna, arranged to

- to receive the data packet,

- to read the signature and to a determine the format of the data field based on pre-stored data format information linked to the signature, such as the pre-stored data format information being linked to the signature in a pre-stored table of data format information for a plurality of signatures,

- to interpret the data representing the quantity value according to the determined format of the data field, and

- to verify the interpreted data using the check sum.

In a fourth aspect, the invention provides a method of transmitting data, the method comprising

- generating a data packet comprising
- a header comprising an identification of a device,
- a data field comprising data,
- a signature representing a coded information regarding a format of the data field, and
- a check sum, such as a Cyclic Redundancy Check sum, allowing a receiver to verify an interpretation of the data in the data field, and
- transmitting the data packet.

It is appreciated that advantages described for the first aspect applies as well for all other aspects. Further, embodiments of the first aspects may in any way be combined with the other aspects.

These and other aspects, features and/or advantages of the invention will be apparent from and elucidated with reference to the embodiments described hereinafter.

BRIEF DESCRIPTION OF THE DRAWINGS

Embodiments of the invention will be described, by way of example only, with reference to the drawings, in which

Fig. 1 illustrates a consumption meter reading system with a utility system communicating with a consumption meter using the inventive data packet format,

Fig. 2 illustrates a data packet in the form of a full MBUS string including both data format and data in its application layer,

Fig. 3 illustrates a data packet in the form of an MBUS format string, i.e. an MBUS string with only data format in its application layer,

Fig. 4 illustrates a data packet in the form of an MBUS data string, i.e. an MBUS string with only data in its application layer,

Fig. 5 illustrates consumption meter communication types in different communication modes of the consumption meter, and

Fig. 6 illustrates a preferred mode of encryption and decryption.

DESCRIPTION OF EMBODIMENTS

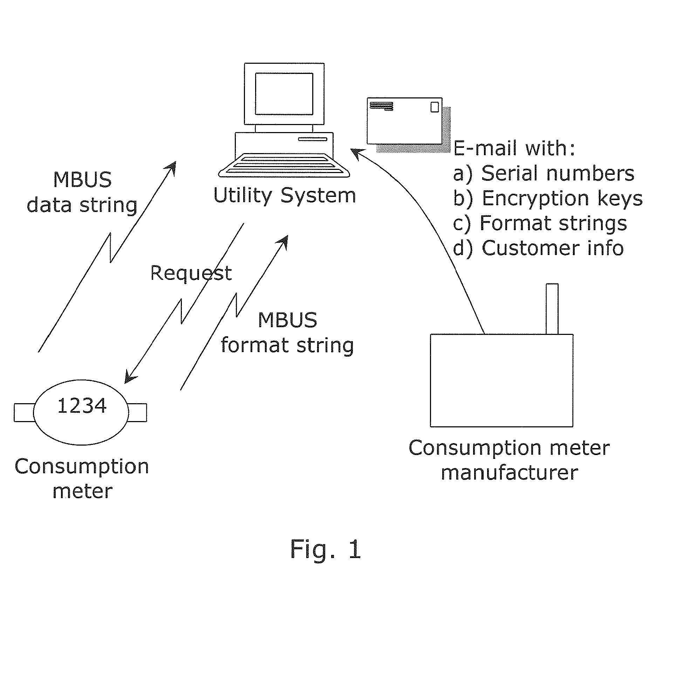

Fig. 1 shows a consumption meter reading system with a consumption meter arranged to communicate a consumed quantity to a utility system according to the invention, i.e. by means of an MBUS data string including an identification of the meter and a signature which can be used by the utility system to interpret the data in the MBUS data string. As illustrated, the utility system can receive the necessary information to interpret the received data by means of an email from the consumption meter identification manufacturer. Such email may comprise serial numbers, encryption keys (if data encryption is used), format strings and costumer information which allows the utility system to correctly interpret the received data with the consumption meter identification and signature available from the MBUS data string and to charge costumers associated with the respective consumption meters accordingly.

A consumption meter may be able to select between a plurality of data formats, each having a unique signature, and thus to be able to correctly interpret all data formats, the utility system must have information about these different signatures.

Using only the MBUS data string to transmit data, quantity values can be transmitted in a power efficient ways, e.g. in a repeated transmission of the MBUS data string in wireless RF form to a laptop PC during drive-by. Such laptop PC may perform the interpretation of the received data, or it may serve as a pure mobile data collector suited to transfer the collected data from a number of consumption meters to a stationary computer system which then performs the interpretation of the collected data using the consumption meter identifications and signatures.

As also illustrated, it is an option that the utility system transmits a request to the consumption meter which then responds by transmitting MBUS format string corresponding to a transmitted data string. Hereby the utility system can verify its interpretation of the data in the MBUS data string, or it allows the utility system to receive data from the consumption meter without any prior knowledge regarding the signature in the MBUS data string.

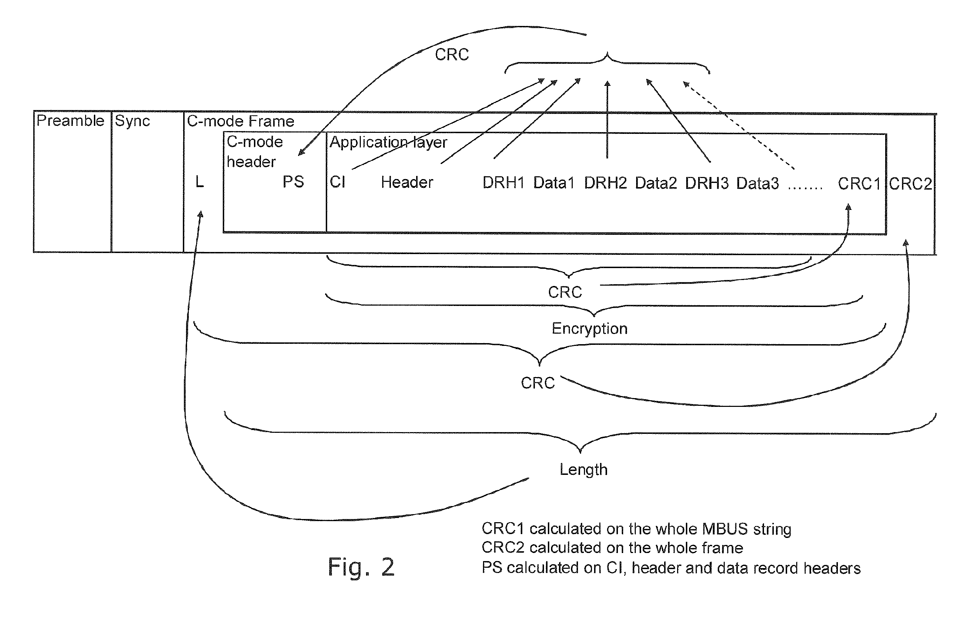

Fig. 2 shows a full MBUS application layer string (EN 13757-3) with data record headers DRH1, DRH2, DRH3 as well as the associated data Data1, Data2, Data3. In the illustrated embodiment, the signature PS in the C-mode header is a Cyclic Redundancy Check (CRC) checksum calculated on the control information CI, the Header, and data record headers DRH1, DRH2, DRH3. With this full MBUS format, the data record headers DRH1, DRH2, DRH3 occupy a significant part of the total MBUS string, and in case a limited amount of different types of data formats are used, the signature PS, e.g. having a length of 16 bit, suffices to identify the format of the data Data1, Data2, Data3 in case the receiver has the information to interpret the signature. A first checksum CRC1 is included calculated on the whole MBUS string. A second CRC2 is included, which is calculated over the whole frame, so as to allow verification of the data transport.

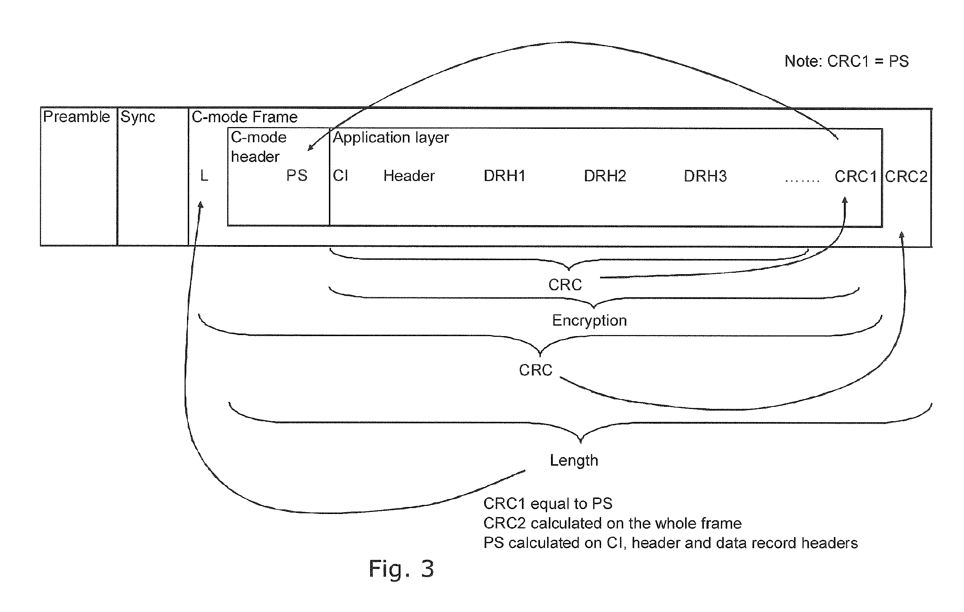

Fig. 3 shows a data format MBUS string where only the data record headers DRH1, DRH2, DRH3 are included, i.e. no data values are included. In this case the signature PS is selected to be a CRC checksum of the control information CI, the Header, and the data record headers DRH1, DRH2, DRH3. A first checksum CRC1 is included which is identical with the signature PS. A second checksum CRC2 is included, which is calculated over the whole frame, so as to allow verification of the data transport.

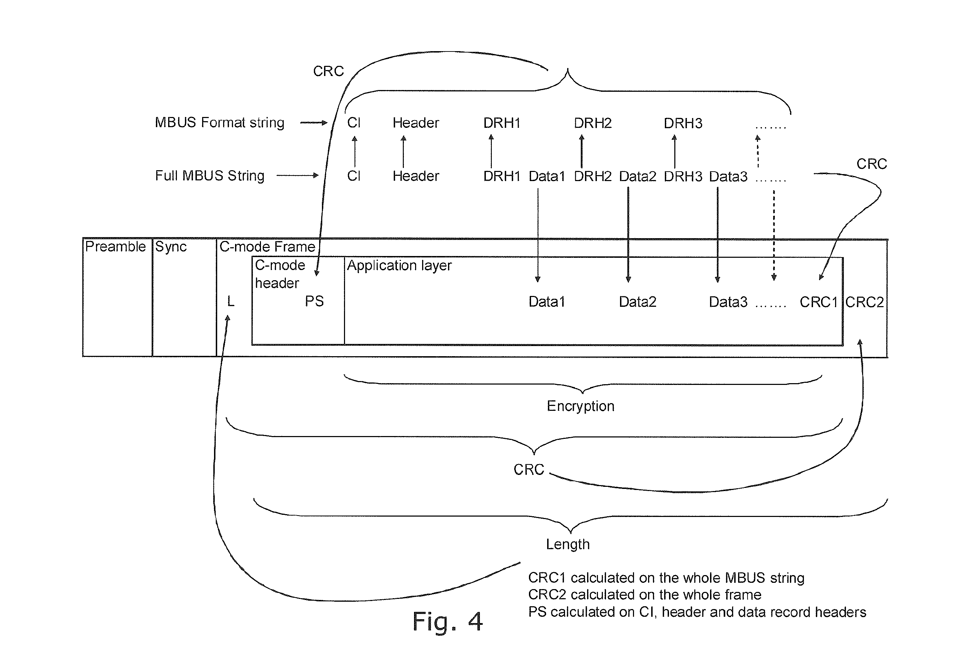

Fig. 4 shows a data MBUS string corresponding to the data format MBUS string in Fig. 3. In the data MBUS string the data record headers are omitted, and only data values Data1, Data2, Data 3 are included. In this case, the signature PS is calculated as a CRC checksum over the control information CI, the Header, and the data record headers DRH1, DRH2, DRH3 of the corresponding MBUS format string or the full MBUS string, as illustrated. This allows a receiver of the data Data1, Data2, Data 3 to verify the data format interpreted using the signature PS.

A first CRC1 checksum is included which is calculated on the whole MBUS string. Again, a second checksum CRC2 is included, which is calculated over the whole frame, so as to allow verification of the data transport..

In the following, a specific embodiment of the invention will be described, namely in the form of a proposed revision to the standard EN 13757-4 where the principles according to the invention are implemented in the form of an additional mode of communication referred to as "mode C". For proper understanding of the following, reference is made also to standard EN 13757-3.

Proposal for revision of standard EN 13757-4

Proposed addition to section 3.1 of EN 13757-4: d) "Compact mode" mode C. Optimised for battery operation. In this mode, the meter transmits very short frames every few seconds, thus allowing walk-by and/or drive-by and/or fast access data in fixed networks. Static formatting data can be omitted for lowest possible current consumption.

Transmit only sub-mode C1: The meter will transmit meter ID, meter time and readout values. Values can be transmitted without formatting.

The bidirectional sub-modes C2a - C2h: The meter frequently transmits a frame containing at least the meter ID and opens a listen window after each transmission for the reception of incoming data or commands.

Proposed addition to section 3.2 of EN 13757-4:

Table 1 - Meter communication type

| Mode | WAY | Typical application | Bit-rate kbps | Duty cycle | Maximum duty cycle | Data coding + Header | Description |
|---|---|---|---|---|---|---|---|
| C1 | 1 | Frequent transmit only meter for stationary or mobile receiving readout | 100 | | 0.1% | NRZ + Short header, Compact data packets | Transmit only on a regular basis, with short data bursts < 10ms. Operates in the 0.1% duty cycle band |
| C2 | 2 | Frequent transmit meter for stationary or mobile receiving readout. Over-the-air protocol update | Meter to other: 100 Other to meter: Submodes: C2ade:50 C2bf: 100 C2cg:200 C2h:400 | | Meter to other: 0.1% Other to meter: 10% or 1% | NRZ + Short header, Compact data packets | Meter unit transmits on a regular basis like Type C1 and its receiver is enabled for a short period after the end of each transmission and locks on if a proper preamble and sync word is detected. Data packets received by the meter are used for protocol updates and commands. |

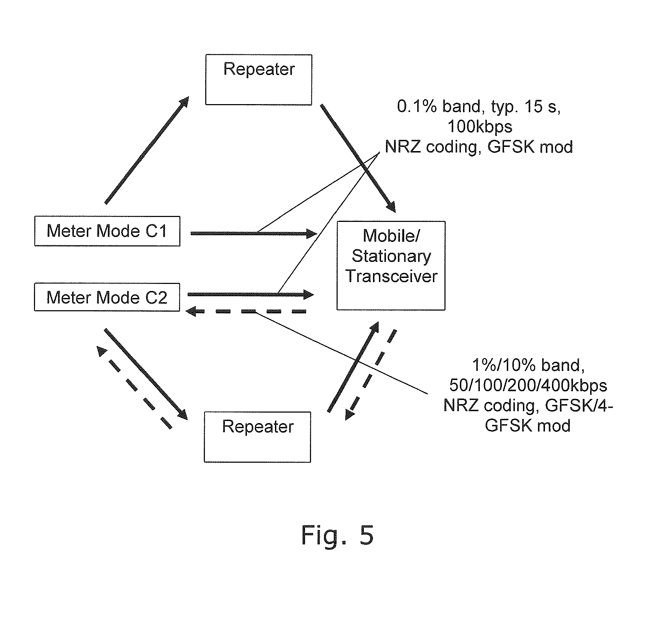

Fig. 5 illustrates the operation between the different modes and components

Transmitter performance classes in meter end as 3.3 mode T.

Exceptions:

Transmitter class $H_T$, Other to meter, minimum $ERP_P$ 15dBm. Protection of meter receivers shall be implemented by limiting other output power to : $P_o < -RSSI_{other} - 20dBm$

($RSSI_{other}$ is the received signal strength at other in dBm)

VI Mode C

VI.1 Mode C: general

The radio part of a meter shall, for all parameters, as a minimum conform to the requirements of ETSI EN300 220, Part 1 and Part 2, even if some applications require extended temperature or voltage range.

Table IX. Mode C, General

| Characteristic | Mode | Min | Typ | Max | Unit |
|---|---|---|---|---|---|
| Frequency band: meter to other | C1, C2 | 868.7 | 868.95 | 869.2 | Mhz |
| Frequency band: other to meter | C2abc<br>C2d<br>C2e<br>C2fgh | 869.4<br>868.0<br>868.3<br>868.0 | 869.525<br>868.175<br>868.425<br>868.300 | 869.65<br>868.3<br>868.6<br>868.600 | Mhz |
| Transmitter duty cycle: meter to other | C1, C2 | | | 0.1 | % |
| Transmitter duty cycle: other to meter | C2 | | | 10 | % |
| Notes as in table 8 | | | | | |

VI.2 mode C: Physical link parameters for the physical link shall be as listed in Table X.

Table X - Mode C, Link parameters

| Characteristic | Mode/ Class | Sym | Min | Typ | Max | Unit | Note |
|---|---|---|---|---|---|---|---|
| Centre frequency: (Meter to other) | C1,C2 | | 868.920 | 868.95 | 868.98 | Mhz | ~35 ppm |
| Centre frequency: (Other to meter) | C2abc<br>C2d<br>C2e<br>C2fgh | | 869.500<br>868.150<br>868.400<br>868.275 | 869.525<br>868.175<br>868.425<br>868.300 | 869.550<br>868.200<br>868.450<br>868.325 | Mhz | ~25 ppm |
| Modulation Meter to other | C1, C2 | | GFSK, +/-45 (+/-5) khz dev | | | | |
| Modulation Other to meter | C2a<br>C2b<br>C2c<br>C2d<br>C2e<br>C2f<br>C2g<br>C2h | | GFSK +/-45 (+/-5) khz dev<br>GFSK +/-50 (+/-5) khz dev<br>4 GFSK -60,-20,+20,+60 khz<br>GFSK +/-45 (+/-5) khz dev<br>GFSK +/-45 (+/-5) khz dev<br>GFSK +/-50 (+/-5) khz dev<br>GFSK +/-75 (+/-5) khz<br>4 GFSK khz -150,-50,+50,+150 | | | | |
| GFSK Relative bandwidth | C1,C2 | BT | 0.45 | 0.5 | | | |

(continued)

| Characteristic | Mode/ Class | Sym | Min | Typ | Max | Unit | Note |
|---|---|---|---|---|---|---|---|
| Bit rate transmit Meter to other | C1,C2 | br | | 100 | | kbps | |
| Bit rate transmit Other to meter | C2ade C2bf C2cg C2h | br | | 50 100 200 400 | | kbps | |
| Bit rate tolerance | C1, C2 | Dfb | | 0 | 1 | % | |
| Preamble length | C1 | PL | | 32 | | bits | |
| | C2abd, C2efg | PL | | 32 | | | |
| | C2ch | PL | | 64 | | | |
| Synchronisation length | C1 | PL | | 32 | | bits | |
| | C2abd, C2efg | PL | | 32 | | | |
| | C2ch | PL | | 64 | | | |
| Postamble length | C1,C2 | | | 0 | | bits | |
| Listen window begin | C2 | LWb | | | 30 | ms | |
| Listen window end | C2 | LWe | 33 | | | ms | |
| New Package Pause | C2 | Pp | 31 | | 34 | ms | |
| Repeater delay | C1 | | 0 | | 5 | ms | |
| Submode timeout period | C2 | | 180 | | 240 | s | |
| Repeater other listen window begin | C2 | | 4 | | | ms | |
| Repeater other listen window end | C2 | | | | 8 | ms | |
| Reply Frame Start | C2 | | 30 | | 35 | ms | |
| Jitter Factor | C1/C2 | JF | | 10 | | ms | |
| Dual mode interval | C2 | | | | 180 | s | |
| | | | | | | | |
| PN Time Out | | | | 48 | | hours | |
| | | | | | | | |
| | | | | | | | |
| All bits are NRZ coded | | | | | | | |

VI.3 mode C: Reciever

Table XI - Mode C, Reciever

| Characteristic | Class | Sym | Min | Typ | Max | Unit | Note |
|---|---|---|---|---|---|---|---|
| Sensitivity (BER < 10-2) or (PER <0.2) Other | $H_R$ | $P_O$ | -100 | -105 | | dBm | |
| Sensitivity (BER <10-2) or (PER <0.2) Meter | Hr | | -100 | | | dBm | Mode C2abdef |
| Sensitivity (BER <10-2) or (PER <0.2) Meter | Hr | | -93 | | | dBm | Mode C2cg |

(continued)

| Characteristic | Class | Sym | Min | Typ | Max | Unit | Note |
|---|---|---|---|---|---|---|---|
| Sensitivity (BER <10-2) or (PER <0.2) Meter | Hr | | -86 | | | dBm | Mode C2h |
| | | | | | | | |
| Blocking Performance | | | 2 | | | Class | |
| Notes as table 10 | | | | | | | |

VI.4 mode C: Data encoding

VI.4.1 General

All communication from meter to other and communication in the C2a, C2b, C2d, C2e and C2f modes other to meter is transmitted as GFSK modulated data, encoded as NRZ, with the low frequency corresponding to a binary '0' In the C2c, C2g and C2h modes other to meter communication is sent as 4-GFSK modulated data, encoded as NRZ, with the lowest frequency corresponding to binary '00', next frequency is corresponding to binary '01', third frequency is corresponding to binary '11' and the highest frequency is corresponding to binary '10'.

All bytes are sent with the MSB first, all combined data except A and M fields are sent with the most significant byte first. A and M fields shall be sent with the low byte first. Payload data byte direction shall follow EN 13757-3

VI.4.2 Preamble and synchronisation

The total preamble (header + synchronisation) sequence for this mode depends on the direction and sub mode:

All communication from meter to other and communication from other to meter in the C2a, C2b, C2d, C2e, C2f, and C2g modes shall be preceded by n x (01) 0000111110100101 x 2, with n >=16 in meter to other communication, and n >=16 in other to meter communication

All communication from other to meter in the C2c and C2h shall be preceded by n x (0010) 0000101010100001 x 2 with n >= 16

The decoder may detect that the receiver has captured a new transmission, by detecting a new preamble and synchronization sequence AND an abrupt increase in the received signal strength larger than 10dB. In that case the receiver shall stop the analysis of the current frame and start detecting a new frame. This "capture detect" feature increases the capacity of the system in presence of many users.

The beginning of the preamble + synchronisation sequence from meter to other is equal to the beginning of the same sequence in the T mode, thus a receiver capable of receiving a mix of both types of packets can be designed.

VI.5 Mode C: Data transport layer

VI.5.1 General

Note that this is not compatible with EN60870-1 and EN60870-5-2. Nested CRC is used for enhanced data security.

VI.5.2 Frame format for the different fields

| L | A | M | P | E | R | I | C | PR | PN | PS | Data | CRC |
|---|---|---|---|---|---|---|---|---|---|---|---|---|
| 8 | 40 | 15 | 1 | 1 | 2 | 1 | 4 | 3 | 29 | 16 | 8*(L- 16) | 16 |

VI.5.3 MODE C: Field definitions

VI.5.3.2 Mode C: L : Length field

The first 8 bits of the frame is the length field. The field specifies the number of subsequent user data bytes, including control, address, and packet information and the data, and excluding the CRC bytes. A maximum of 254 bytes can be specified.

VI.5.3.3 Mode C: M: Manufacturer ID field

The 9th to 48th bit of the frame shall contain the address of the meter. Each manufacturer shall guarantee that the address is unique

VI.5.3.4 Mode C: A: Address field

The 49th to 63rd bit of the frame shall contain a unique User/Manufacturer ID of the meter formed from a three letter ISO 646 code (A..Z) as specified in EN 13757-3:2004, 5.5. See Annex B for administration of these three letter codes.

VI.5.3.5 Mode C: P: Priority field

The $64^{th}$ bit is a priority bit. If P=0 the frame contains data that is to be treated in a normal manner. P=1 indicates that the frame is prioritized, i.e. the data must be transported as fast as possible, and if necessary, delaying other frames in the system. Only frames containing alarms, installation data and other non-frequent data shall utilize this bit.

VI.5.3.6 Mode C: E : Extend field

The $65^{th}$ bit is an extension bit. If E=0 the transmission will end normally after L bytes and a CRC. If E=1 a new package will be transmitted after the CRC. A New Package Pause is inserted between the frames.

VI.5.3.7 Mode C: R : Repeater signature field

The $66^{th}$ to the $67^{th}$ bit is a repeater signature field. If R=00 the direct source of the package is a meter. If R=01 the package has been relayed by a radio repeater. The timing of communication from other to meter shall be adjusted, so that the synchronisation byte is received within the Repeater other listen Window. If R=10 the package has been relayed more than once, and no communication to the meter is supported by the protocol, even if the control field indicates otherwise. R=11 is reserved

VI.5.3.8 Mode C: I: Instal field

The 68th bit is an installation bit. I=1 shall indicate installation mode.

VI.5.3.9 Mode C: C: Control field

The $69^{th}$ to the $72^{nd}$ bit in the frame is the Control field. It specifies the frame type.

Meter-to-other direction

For the sub-mode C1 (send-no-reply) the C-field value C=$0YZZ_b$ shall be used
Y is a subfield:
Y=1 shall indicate that the message is a reply to a request.
ZZ is a subfield:
$ZZ=00_b$ shall indicate that the meter always operates as a send-no-reply device, i.e. the meter will never open a listen window after transmission
$ZZ=01_b$ shall indicate that although the present frame is in C1 mode, the meter will operate in the C2 mode no later than the time specified by the Dual Mode Interval
$ZZ=10_b$ shall indicate that although the present frame is in C1 mode, the meter will operate in the C2 mode no later than 5 times the time specified by the Dual Mode Interval
$ZZ=11_b$ shall indicate that although the present frame is in C1 mode, the meter will operate in the C2 mode later than 5 times the time specified by the Dual Mode Interval

For the sub mode C2 (Access demand), the C-field value C= $1XXX_b$ shall be used.

The $XXX_b$ code indicates the sub mode. A meter in C2 mode shall only listen for other-to-meter communication in the sub mode indicated. Sub mode C2a or C2b are default sub modes, and the meter shall always automatically return to one of these sub modes after a Sub mode Timeout Period unless requested otherwise.

Other to meter direction

After a C2 mode transmission, the meter shall open a listen window and receive and process a frame if it starts within the listen window (ie. synchronisation word is received), and the address matches the meter address.

The C-field value of C=$YXXX_b$ shall be used

Y is a subfield:

Y=0 shall indicate that the frame is an acknowledge of a frame from the meter. Y=1 shall indicate that the frame is request. The meter shall reply if a request from other end has been received and processed successfully. The reply shall start after a period defined by Reply Frame Start. The reply is optionally in C1 or C2 mode.

Submodes

The coding of the submodes $XXX_b$ shall be as specified in table XII.

Table XII

| Value, $XXX_b$ | Submode |
|---|---|
| $000_b$ | C2a |
| $001_b$ | C2b |
| $010_b$ | C2c |
| $011_b$ | C2d |
| $100_b$ | C2e |
| $101_b$ | C2f |
| $110_b$ | C2g |
| $111_b$ | C2h |

VI.5.3.9 Mode C: PR: Presentation field

The 73rd to the 75th bit of the frame shall contain the Presentation field PR= $XYY_b$. If X is 0, then the data in the data field shall not be encrypted. If X is 1, then the data in the data field shall be encrypted, using the AES encryption, specifically the Counter mode (CTR).

The initialisation vector for the encryption shall consist of a nonce and a block counter. The nonce used for each encrypted block shall be equal to the combination of the P-I-C-PR-PS fields and the first 28 bits of the PN field for the first 53 bits. The 75 bit wide block counter shall be equal to 0 for the first frame in a session. The block counter shall continue counting up in the next frame, if the extension bit is equal to 1.

The second and the third bit in the Presentation field shall identify the contents of the data-field:

Meter to other:

| YY | Data field contains |
|---|---|
| 00 | *Full MBUS string*<br>Full application layer data string containing CI field, header, data record headers and data. The last 2 bytes shall contain a CRC checksum of the complete string. |
| 01 | *MBUS format string*<br>Control information and formatting string ie. CI field, header, and data record headers The last 2 bytes shall contain a CRC checksum of the formatting string. This CRC is identical to the PS field. |

(continued)

| YY | Data field contains |
|----|---------------------|
| 10 | *MBUS data string*<br>MBUS data string, i.e. no control, header or data record headers. All data matching a control and formatting need not be transmitted, i.e. the data string can be stopped at any point. The last two bytes shall contain a CRC checksum of the full MBUS string including CI field, formatting and data. |
| 11 | *Modem communication string*<br>The data field shall contain commands and data used for configuration, firmware update, communication intervals etc. |

Other to meter:

| YY | Data field contains |
|----|---------------------|
| 00 | *Full MBUS string*<br>Full application layer string containing CI field, header, data record headers and data. The last 2 bytes shall contain a CRC checksum of the complete string. |
| 01 | *MBUS format string type A*<br>MBUS formatting string request, containing a CI field, a header, and all data record headers requested in the future transmissions from the meter. If accepted by the meter, the data transmitted shall be transmitted as full MBUS strings including the CI field (i.e. YY=00) |
| 10 | *MBUS format string type B*<br>MBUS formatting string request, containing a CI field, a header and all data record headers requested in the future transmissions from the meter. If accepted by the meter, the data transmitted shall be transmitted as MBUS data strings excluding the CI field and data record headers (i.e. YY=10) |
| 11 | *Modem communication string*<br>The data field shall contain commands and data used for configuration, firmware update, communication intervals etc |

VI.5.3.9 Mode C: PN : Packet number field

The 76th to the 104th bit of the frame shall contain the Packet Number. The 2nd to the 20th bit in this field shall be an hour counter, the next 6 bits shall be a minute counter and the last 3 bits shall number packets within each minute. The most significant bit shall be 0 if the Packet Number is an absolute value, counted from January first 2000 00:00:00. The most significant bit shall be 1 if the Packet number is a relative value. The last bit is NOT used in the encryption scheme, and only identical encrypted frames shall be transmitted if Packet numbers only differ by the LSB. This enables repetition of packets without recalculation of the encryption.

Meter to other:

The PN value shall reflect the clock in the meter.

Other to meter:

The PN value shall meet 3 requirements:
The PN value shall be equal to or higher than the PN value received from the meter
The PN value shall be lower than the PN value received from the meter plus the PN Value Time Out.
The PN value shall be higher than the PN value from the last other-to-meter communication.
Recommendation: in scenarios with many identical meters there is a risk that some meters will transmit synchronously for a very long time. This could corrupt reception of signals from one or more of the meters due to collisions. A jittering scheme based on the last 2 bits in the packet number and the last 2 bits of the address is recommended for better performance in such a scenario: Next session shall be delayed by a period calculated by the following formula:

$$t_D = JF * (PN_1 + 2*PN_0 + 4*A_1 + 8*A_0)$$

JF being the Jitter factor, $PN_x$ being the $x^{th}$ bit of the PN field and $A_x$ being the $x^{th}$ bit of the A field.

The unit of $t_D$ shall be milliseconds.

Packets within a session shall not be jittered relative to each other.

VI.5.3.10 Mode C: PS: Packet signature field

The 105$^{th}$ to the 120$^{th}$ bit of the frame shall contain the packet signature.

The PS field shall contain a signature of all control and formatting bytes belonging to the data field. The signature shall identify the sequence and the value of the control and formatting bytes.

Short and long data strings can share the same signature, as long as the data are truncated from the end, and the sequence is preserved.

A preferred signature is the CRC checksum of the CI field, header and data record headers.

VI.5.3.11 Mode C: Data: Application Data

Application data according to the application layer in EN 13757-1 or EN 13757-3. The data shall contain formatting and/or data according to the PR field.

Empty data fields are not accepted. If no application data are to be transported, the data field shall contain a CI field $=78_h$ (no header), and two bytes of $2F_h$ (idle filler DIF) in the data field.

In addition to the application data, an extra CRC is added:

The last two bytes shall be a CRC checksum of the application data. For meter to other communication using MBUS Data string only (PR2,PR1=10) this CRC checksum shall be calculated on the full MBUS packet including CI field, header, data record headers and data.

The CRC shall be generated according to FT3 of EN 60870-5-1.

The CRC polynomial is: $x^{16}+x^{13}+x^{12}+x^{11}+x^{10}+x^8+x^6+x^5+x^2+1$

The initial value is: 0

The final CRC is complemented

VI.5.3.12 Mode C: CRC: Cyclic redundancy check

The CRC shall be computed over the information of the entire frame (including the Length field), and shall be generated according to FT3 of EN 60870-5-1.

The CRC polynomial is: $x^{16}+x^{13}+x^{12}+x^{11}+x^{10}+x^8+x^6+x^5+x^2+1$

The initial value is: 0

The final CRC is complemented

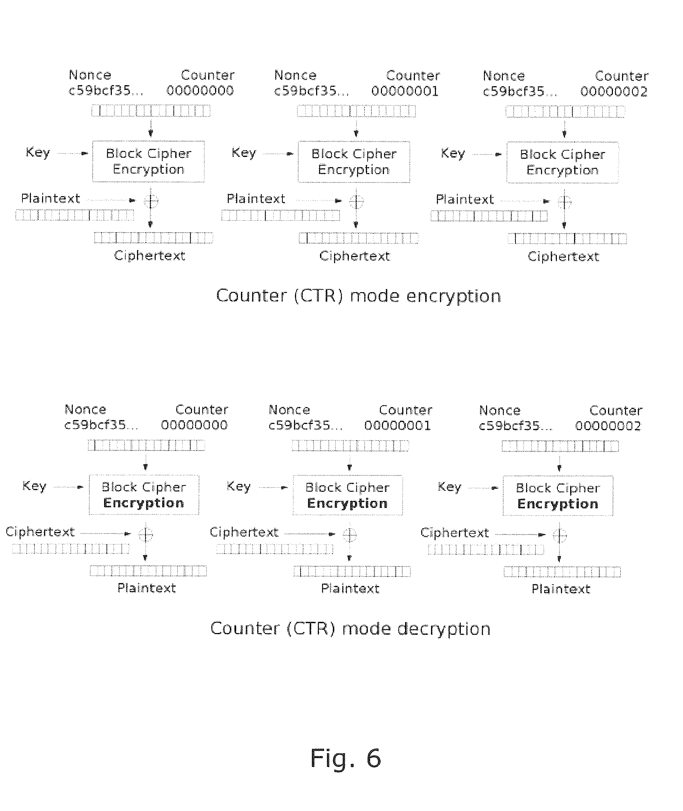

Fig. 6 finally illustrates preferred methods for counter mode encryption and counter mode decryption.

To sum up, the invention provides a data format for communicating data, e.g. for automatic reading of consumption meters, the data format comprising a data packet comprising 1) a header for an identification of a device transmitting the data packet, 2) a data field for data, 3) a signature representing a coded information regarding a format of the data field, and 4) a check sum, such as a Cyclic Redundancy Check sum, allowing a receiver to verify interpretation of the data in the data field. A preferred consumption meter for measuring a consumed quantity value transmits this quantity value according to the data format. Especially, the consumption meter may repeatedly transmit in RF format such data packet in which the data field comprises a time of measuring and the quantity value. Such consumption meter is suited for automatic drive-by reading and it is suited for battery operation, since the data format helps to save power as data format information can be omitted. A reading system is informed about the data format by means of the signature and an identification of the consumption meter, and based on pre-stored information linked to the signature, the system can interpret the read quantity data.

Although the present invention has been described in connection with preferred embodiments, it is not intended to be limited to the specific form set forth herein. Rather, the scope of the present invention is limited only by the accompanying claims.

In this section, certain specific details of the disclosed embodiments are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

1. A data format for communicating data, the data format comprising a data packet comprising

   - a header for an identification of a device transmitting the data packet,
   - a data field for data (Data1, Data2, Data3),
   - a signature (PS) representing a coded information regarding a format of the data field, and
   - a check sum (CRC1), such as a Cyclic Redundancy Check sum, allowing a receiver to verify interpretation of the data (Data1, Data2, Data3) in the data field.

2. A device comprising a communication module, such as a wireless Radio Frequency transmitter, arranged to transmit a data format according to claim 1.

3. Device according to claim 2, comprising a plurality of different pre-stored signatures (PS) linked to different data field formats, such as different decimal places for the data representing the quantity value, or such as different types of data (Data1, Data2, Data3) represented in the data field.

4. Device according to claim 2, arranged to compute a signature (PS) according to a format of the data in the data field.

5. Device according to any of claims 2-4, wherein the signature (PS) has a length of less than 30 bits, such as a length of 16 bits.

6. Device according to any of claims 2-5, wherein the signature (PS) is a check sum, such as a Cyclic Redundancy Check sum of the information regarding the format of the data field.

7. Device according to any of claims 2-6, comprising a plurality of communication modes comprising: a pure transmission mode, and a bi-directional mode.

8. Device according to any of claims 2-7, wherein the consumption meter has a pure transmission mode (C1) in which the communication module repeatedly transmits a data packet, such as transmitting a data packet with an intermediate interval of 1-60 seconds, such as an intermediate interval of 5-20 seconds.

9. Device according to any of claims 2-8, wherein the communication module is driven by a battery.

10. Device according to any of claims 2-9, wherein the communication module comprises a Radio Frequency transmitter arranged to transmit the data packet in a Radio Frequency representation, such as at a carrier frequency within 860-880 MHz, such as using a Gaussian Frequency-Shift Keying modulation.

11. Device according to any of claims 2-10, wherein the communication medium is one of: air, a dedicated wired medium, and a public electric supply network.

12. Consumption meter according to any of claims 2-11, wherein the device is a consumption meter arranged to measure a quantity of a physical entity and to generate a quantity value accordingly, and wherein the data in the data field comprises data representing a time where the consumption meter has measured the consumed quantity and data representing the quantity value.

13. Consumption meter according to claim 12, being one of: an electricity meter, a heating meter, a cooling meter, a water meter, and a gas meter.

14. A consumption meter reading system comprising

   - a consumption meter according to claim 12 or 13,
   - a receiver system, such as comprising a mobile device such as a laptop computer with an antenna, arranged to
   - to receive the data packet,
   - to read the signature (PS) and to a determine the format of the data field based on pre-stored data format information linked to the signature (PS), such as the pre-stored data format information being linked to the signature (PS) in a pre-stored table of data format information for a plurality of signatures (PS),
   - to interpret the data (Data1, Data2, Data3) representing the quantity value according to the determined format of the data field, and
   - to verify the interpreted data using the check sum (CRC1).

15. A method of transmitting data, the method comprising

   - generating a data packet comprising
   - a header comprising an identification of a device,
   - a data field comprising data (Data1, Data2, Data3),
   - a signature (PS) representing a coded information regarding a format of the data field, and
   - a check sum (CRC1), such as a Cyclic Redundancy Check sum, allowing a receiver to verify an interpretation of the data (Data1, Data2, Data3) in the data field, and
   - transmitting the data packet.

EP 2 088 706 A2

MBUS
data string

Utility System

E-mail with:
a) Serial numbers
b) Encryption keys
c) Format strings
d) Customer info

Request

MBUS
format string

1234

Consumption
meter

Consumption meter
manufacturer

Fig. 1

15

Fig. 2

CRC1 calculated on the whole MBUS string
CRC2 calculated on the whole frame
PS calculated on CI, header and data record headers

Note: CRC1 = PS

CRC1 equal to PS
CRC2 calculated on the whole frame
PS calculated on CI, header and data record headers

Fig. 3

EP 2 088 706 A2

CRC

MBUS Format string →  CI   Header   DRH1   DRH2   DRH3   .......

Full MBUS String →  CI   Header   DRH1  Data1  DRH2  Data2  DRH3  Data3  .......

CRC

| Preamble | Sync | C-mode Frame |||||||||
|---|---|---|---|---|---|---|---|---|---|---|
| | | L | C-mode header   PS | Application layer | | Data1 | Data2 | Data3 ....... | CRC1 | CRC2 |

Encryption

CRC

Length

CRC1 calculated on the whole MBUS string
CRC2 calculated on the whole frame
PS calculated on CI, header and data record headers

Fig. 4

Fig. 5

Counter (CTR) mode encryption

Counter (CTR) mode decryption

Fig. 6